(19) Europäisches Patentamt / European Patent Office / Office européen des brevets

(11) **EP 2 610 949 A1**

(12) **EUROPEAN PATENT APPLICATION**
published in accordance with Art. 153(4) EPC

(43) Date of publication:
**03.07.2013 Bulletin 2013/27**

(51) Int Cl.:
*H01M 4/48* (2010.01)     *H01G 9/058* (0000.00)
*H01M 4/36* (2006.01)     *H01M 4/587* (2010.01)

(21) Application number: **11819544.5**

(22) Date of filing: **29.07.2011**

(86) International application number:
**PCT/JP2011/004348**

(87) International publication number:
**WO 2012/026067 (01.03.2012 Gazette 2012/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.08.2010 JP 2010188053**

(71) Applicant: **OSAKA Titanium Technologies Co.,
Ltd.
Amagasaki-shi, Hyogo 660-8533 (JP)**

(72) Inventors:
• **YASUDA, Kouji
  Amagasaki-shi
  Hyogo 660-8533 (JP)**
• **SHIMOSAKI, Shinji
  Amagasaki-shi
  Hyogo 660-8533 (JP)**

(74) Representative: **Simons, Amanda Louise
J A Kemp
14 South Square
Gray's Inn
London WC1R 5JJ (GB)**

(54) **POWDER FOR NEGATIVE ELECTRODE MATERIAL OF LITHIUM ION SECONDARY BATTERY, NEGATIVE ELECTRODE FOR LITHIUM ION SECONDARY BATTERY AND NEGATIVE ELECTRODE FOR CAPACITOR USING SAME, AND LITHIUM ION SECONDARY BATTERY AND CAPACITOR**

(57) Provided is a negative-electrode material powder for a lithium-ion secondary battery including a conductive carbon film on the surface of a lower silicon oxide powder, in which the total content of tar components measured by TPD-MS is not less than 1 ppm by mass and not more than 4000 ppm by mass, and in the Raman spectrum, peaks exist at 1350 cm$^{-1}$ and 1580 cm$^{-1}$, while the peak at 1580 cm$^{-1}$ has a half-value width of not less than 50 cm$^{-1}$ and not more than 100 cm$^{-1}$. In the negative-electrode material powder, a specific surface area measured by the BET method is preferably not less than 0.3 m$^2$/g and not more than 40 m$^2$/g, and the proportion of the conductive carbon film is preferably not less than 0.2 mass% and not more than 10 mass%. A specific resistance of the lower silicon oxide powder is preferably not more than 40000 $\Omega$cm, and a maximum value P1 of Si-O$_x$-incurred halos and a value P2 of the strongest line peak of Si (111) preferably satisfy a relationship of P2/P1<0.01 in XRD measurement. This makes it possible to provide a negative-electrode material powder which can be used to obtain a lithium-ion secondary battery as being durable at practical level with large discharge capacity and satisfactory cycle characteristics.

FIG. 2

**Description**

TECHNICAL FIELD

The present invention relates to a negative-electrode material powder, which can be used to obtain a lithium-ion secondary battery that is durable at practical level with large discharge capacity and satisfactory cycle characteristics. The present invention also relates to a negative electrode for a lithium-ion secondary battery and a negative electrode for a capacitor using this negative-electrode material powder, and a lithium-ion secondary battery and a capacitor.

BACKGROUND ART

In accordance with recent noticeable developments in the portable electronic equipment, communication equipment and the like, development of secondary batteries with high energy density is strongly demanded from the viewpoint of the economic efficiency and reduction in size and weight of the equipment. Currently available secondary batteries with high energy density include a nickel-cadmium battery, a nickel hydrogen-battery, a lithium-ion secondary battery, a polymer battery and the like. Among these batteries, the demand for the lithium-ion secondary battery is strongly growing in the power source market due to its dramatically enhanced life and capacity, compared with the nickel cadmium battery or nickel-hydrogen battery.

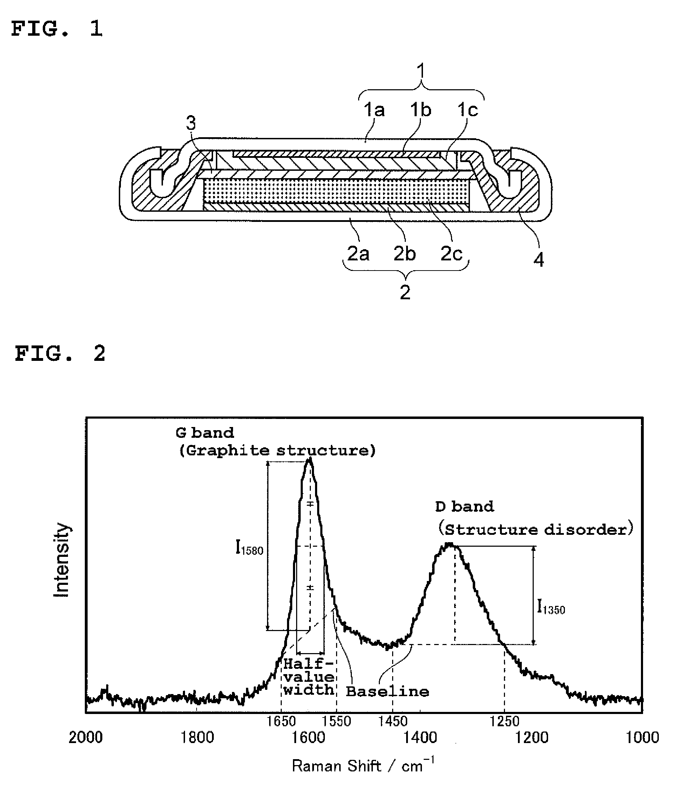

Fig. 1 is a view showing a configuration example of a coin-shaped lithium-ion secondary battery. The lithium-ion secondary battery includes, as shown in Fig. 1, a positive electrode 1, a negative electrode 2, a separator 3 impregnated with electrolyte, and a gasket 4 which seals the content of battery while maintaining the electric insulation between the positive electrode 1 and the negative electrode 2. When charging and discharging are performed, lithium ions reciprocate between the positive electrode 1 and the negative electrode 2 through the electrolyte of the separator 3.

The positive electrode 1 includes a counter electrode case 1a, a counter electrode current collector 1b and a counter electrode 1c, where lithium cobaltate ($LiCoO_2$) or manganese spinel ($LiMn_2O_4$) is mainly used for the counter electrode 1c. The negative electrode 2 includes a working electrode case 2a, a working electrode current collector 2b and a working electrode 2c, where a negative-electrode material used for the working electrode 2c generally includes an active material capable of occluding and releasing lithium ions (negative electrode active material), a conductive auxiliary agent, and a binder.

As a negative electrode active material for lithium-ion secondary battery, conventionally, a carbon-based material is used. As a new negative-electrode active material which can enhance the capacity of lithium-ion secondary battery more than in the past, a composite oxide of lithium and boron, a composite oxide of lithium and transition metal (V, Fe, Cr, Mo, Ni, etc.), a compound including Si, Ge or Sn, N and O, Si particle having a surface coated with a carbon layer by chemical vapor deposition, and the like are proposed.

However, each of these negative electrode active materials enhances the expansion or contraction thereof during occlusion and release of lithium ions, although it can improve the charging and discharging capacity to enhance the energy density. Therefore, lithium-ion secondary batteries using these negative electrode active materials are insufficient in the sustainability of discharge capacity against the repeated charging and discharging (hereinafter referred to as "cycle characteristics").

On the other hand, it is conventionally attempted to use powders of silicon oxide represented by $SiO_x$ ($0 < x \leq 2$), such as SiO, as the negative electrode active material. The silicon oxide can be a negative electrode active material with larger effective charging and discharging capacity, since the deterioration during charging and discharging such as the collapse of a crystal structure due to the occlusion and release of lithium ions or the generation of an irreversible substance is small. Therefore, the silicon oxide can be used as the negative electrode active material to obtain a lithium-ion secondary battery which is higher in capacity than the case using carbon and is more satisfactory in cycle characteristics than the case using a high-capacity negative-electrode material such as Si or Sn alloy.

When the silicon oxide powder is used as the negative electrode active material, in general, a carbon powder or the like is mixed thereto as a conductive auxiliary agent for compensating the low electric conductance of the silicon oxide. This allows securement of the electric conductivity in the vicinity of the portion of contact between the silicon oxide powder and the conductive auxiliary agent. However, in portions away from the contact portion, the silicon oxide powder is less likely to function as the negative electrode active material since the electric conductivity cannot be secured.

In order to solve this problem, proposed in Patent Literature 1 is a conductive silicon composite for non-aqueous electrolyte secondary battery negative-electrode material including a film of carbon formed on the surface of a particle having a structure in which microcrystals of silicon are dispersed in silicon dioxide (conductive silicon composite), and a method for producing the same.

CITATION LIST

PATENT LITERATURE

PATENT LITERATURE 1: Japanese Patent No. 3952180

SUMMARY OF INVENTION

TECHNICAL PROBLEM

According to the method proposed in Patent Literature 1, the formation of a uniform carbon film on the conductive silicon composite allows the securement of sufficient electric conductivity. However, according to the present inventors' examinations, a lithium-ion secondary battery using the conductive silicon composite of Patent Literature 1 had a problem such that since the silicon dioxide with microcrystals of silicon dispersed therein is used as the negative-electrode material, the expansion and contraction are intensified in the occlusion and release of lithium ions during charging and discharging, causing a sudden drop of capacity at a certain point of time when the charging and discharging cycle is repeated. Further, the lithium-ion secondary battery was not sufficient in discharge capacity and cycle characteristics.

To solve this problem, the present inventors made various examinations, particularly, on silicon oxide that is regarded as being a negative-electrode material powder (negative electrode active material) capable of enhancing the capacity of lithium-ion secondary battery. As a result, it was found that the deterioration of initial efficiency (the ratio of discharge capacity to charge capacity in first charging and discharging after shipment for a lithium-ion secondary battery (in initial charging and discharging)) is due to the formation of $Li_4SiO_4$, shown by the following expression (1). On the right-hand side of the expression (1), a first term $Li_{22}Si_5$ is a component bearing a reversible capacity, and a second term $Li_4SiO_4$ is a component bearing an irreversible capacity. $Li_4SiO_4$ cannot release lithium ions.

$$SiO_x + (44-x)/10Li^+ + (44-x)/10e^- \rightarrow (4-x)/20Li_{22}Si_5 + x/4Li_4SiO_4 \qquad (1)$$

The present inventors' examinations revealed that when silicon oxide ($SiO_x$) is used as the negative-electrode material powder, and x=1, the lithium-ion secondary battery theoretically has characteristics of reversible capacity of 2007 mAh/g and initial efficiency of 76%. Since the reversible capacity was less than or comparable to about 1500 mAh/g in a conventional lithium-ion secondary battery using silicon oxide as the negative-electrode material powder, there is still room for improvement with respect to the reversible capacity of the lithium-ion secondary battery using silicon oxide as the negative-electrode material powder.

The present inventors' further examinations revealed a defect in a negative-electrode material powder having a carbon film which is formed on the surface of silicon oxide powder under the conditions described in Patent Literature 1, wherein the cycle characteristics of a resulting lithium-ion secondary battery is poor due to high crystallinity of the carbon film. This is considered to be attributable to the fact that the higher the crystallinity of the carbon film to be formed on the surface of silicon oxide powder is, the smaller the speed of receiving lithium ions is, and the lower the capability of relaxing the expansion and contraction of silicon oxide is.

In view of this problem, the present invention has an object to provide a negative-electrode material powder for a lithium-ion secondary battery which is durable at practical level with large discharge capacity and satisfactory cycle characteristics, a negative electrode for a lithium-ion secondary battery and a negative electrode for a capacitor using this negative-electrode material powder, and a lithium-ion secondary battery and a capacitor.

SOLUTION TO PROBLEM

In order to solve the above-mentioned problem, the present inventors reviewed deterring the crystallinity of carbon film. As a result, it was found that carbon low in crystallinity can be obtained by setting the treatment temperature for carbon film formation to a temperature of not lower than 700°C and not higher than 750°C, which is lower than the temperature range as being 800°C or higher described in Patent Literature 1. However, it was also found that when the carbon film-forming treatment is performed at not lower than 700°C and not higher than 750°C, tar components composed of macromolecular hydrocarbon, which are generated in thermal decomposition of organic matter as a carbon source, are apt to be left on the carbon film, and further the tar components are, as described later, correlated with the characteristics of lithium-ion secondary battery such that the larger the residual amount of the tar components, the poorer the cycle characteristics of the lithium-ion secondary battery.

This correlation results from that the existence of tar components facilitates the separation of the carbon film from the silicon oxide powder during charging and discharging of the lithium-ion secondary battery, and the separation progresses in accordance with increase in the number of charge/discharge cycles to deteriorate the performance of the battery. Additionally, the existence of tar components leads to increase in the irreversible capacity of the lithium-ion secondary battery since the tar components react with lithium and, furthermore, carbon containing the tar components causes an energy loss due to its high electric resistance.

Therefore, the present inventors examined about a method for removing the tar components, paying attention to the heating of carbon film-formed silicon oxide powder under vacuum (hereinafter also referred to as "vacuum treatment"), and confirmed that the tar components can be removed by this treatment. However, in the course of the examination, a problem occurred such that an extremely high heating temperature in the vacuum treatment leads to reduction in battery capacity since SiC is generated in the vicinity of the interface between silicon oxide and carbon film, and the amount of Si contributable to the battery capacity is reduced due to the generation of SiC. With respect to this problem, the present inventors found that the problem can be prevented by setting the heating temperature in the range of not lower than 600°C to not higher than 750°C.

The present invention has been achieved based on the above-mentioned findings, and the summaries thereof lie in a negative-electrode material powder for lithium-ion secondary battery in the following (1) to (6), a negative electrode for lithium-ion secondary battery of the following (7), a negative electrode for capacitor of the following (8), a lithium-ion secondary battery of the following (9), and a capacitor of the following (10).

(1) A negative-electrode material powder for a lithium-ion secondary battery having a conductive carbon film on the surface of a lower silicon oxide powder, characterized in that the total content of tar components measured by TPD-MS is not less than 1 ppm by mass and not more than 4000 ppm by mass, and peaks exist at 1350 cm$^{-1}$ and 1580 cm$^{-1}$ in the Raman spectrum, while the peak at 1580 cm$^{-1}$ has a half-value width of not less than 50 cm$^{-1}$ and not more than 100 cm$^{-1}$.

(2) The negative-electrode material powder for the lithium-ion secondary battery according to (1), characterized in that a specific surface area measured by the BET method is not less than 0.3 m$^2$/g and not more than 40 m$^2$/g.

(3) The negative-electrode material powder for the lithium-ion secondary battery according to (1) or (2), characterized in that in the Raman spectrum, the ratio $I_{1350}/I_{1580}$ of the height ($I_{1350}$) of the peak at 1350 cm$^{-1}$ to the height ($I_{1580}$) of the peak at 1580 cm$^{-1}$ satisfies $0.1 < I_{1350}/I_{1580} < 1.4$.

(4) The negative-electrode material powder for the lithium-ion secondary battery according to any one of (1) to (3), characterized in that the proportion of the conductive carbon film is not less than 0.2 mass% and not more than 10 mass%.

(5) The negative-electrode material powder for the lithium-ion secondary battery according to any one of (1) to (4), characterized in that a specific resistance is not more than 40000 Ωcm.

(6) The negative-electrode material powder for the lithium-ion secondary battery according to any one of (1) to (5), characterized in that a maximum value P1 of SiO$_x$-derived halos which appear at $2\theta$=10 to 30° and a value P2 of the strongest line peak of Si (111) which appears at $2\theta$=28.4±0.3°, in measurement by XRD using CuK$_\alpha$ ray, satisfy a relationship of P2/P1<0.01.

(7) A negative electrode for a lithium-ion secondary battery, using the negative-electrode material powder for the lithium-ion secondary battery according to any one of (1) to (6).

(8) A negative electrode for a capacitor, using the negative-electrode material powder for the lithium-ion secondary battery according to any one of (1) to (6).

(9) A lithium-ion secondary battery, using the negative electrode for the lithium-ion secondary battery according to (7).

(10) A capacitor, using the negative electrode for the capacitor according to (8).

In the present invention, the "lower silicon oxide powder" means a powder of SiO$_x$ which satisfies $0.4 \leq x \leq 1.2$. The measuring method of the x of SiO$_x$, the measuring method of the specific surface area by the BET method and the measuring method of the tar component content by TPD-MS will be described later.

With respect to the lower silicon oxide powder, as described later, the wording of "including a conductive carbon film formed on the surface" indicates that the value of mole ratio Si/C of Si to C based on surface analysis using an X-ray photoelectron spectrometer is 0.02 or less, or means a state such that most of the surface of the lower silicon oxide powder is covered with C with almost no exposure of Si.

ADVANTAGEOUS EFFECTS OF INVENTION

The negative-electrode material powder for a lithium-ion secondary battery and the negative electrode for a lithium-ion secondary battery or negative electrode for a capacitor of the present invention can be used to obtain a lithium-ion secondary battery or a capacitor which are durable at practical level with large discharge capacity and satisfactory cycle characteristics. The lithium-ion secondary battery and capacitor of the present invention are large in discharge capacity and satisfactory in cycle characteristics.

BRIEF DESCRIPTION OF DRAWINGS

[Fig. 1] Fig. 1 is a view showing a configuration example of a coin-shaped lithium-ion secondary battery.
[Fig. 2] Fig. 2 is a view showing the Raman spectrum of a carbon film-formed silicon oxide powder, in which peaks exist at 1350 cm$^{-1}$ and 1580 cm$^{-1}$.
[Fig. 3] Fig. 3 is a view showing a configuration example of a production equipment for silicon oxide.

DESCRIPTION OF EMBODIMENTS

1. Negative-Electrode Material Powder for Lithium-Ion Secondary Battery of the Invention

The negative-electrode material powder for a lithium-ion secondary battery of the present invention is a negative-electrode material powder for a lithium-ion secondary battery having a conductive carbon film formed on the surface of a lower silicon oxide powder, in which the total content of tar components measured by TPD-MS is not less than 1 ppm by mass and not more than 4000 ppm by mass, and peaks exist at 1350 cm$^{-1}$ and 1580 cm$^{-1}$ in the Raman spectrum, while the peak at 1580 cm$^{-1}$ has a half-value width of not less than 50 cm$^{-1}$ and not more than 100 cm$^{-1}$.

The lower silicon oxide powder is, as described above, a powder of $SiO_x$ which satisfies $0.4 \le x \le 1.2$. The reason for setting the x to this range is that when the value of x is below 0.4, the deterioration associated with charging and discharging cycles becomes serious in a lithium-ion secondary battery and a capacitor each using the negative-electrode material powder of the present invention, and when the value exceeds 1.2, the battery capacity is reduced. The x preferably satisfies $0.8 \le x \le 1.05$.

By forming the conductive carbon film on the lower silicon oxide powder that is an insulator, the discharge capacity of a lithium-ion secondary battery using this lower silicon oxide powder as the negative-electrode material powder can be improved.

In the negative-electrode material powder for a lithium-ion secondary battery of the present invention, the total content of tar components is not less than 1 ppm by mass and not more than 4000 ppm by mass. When the total content of tar components is higher than 4000 ppm by mass, a resulting lithium-ion secondary battery is insufficient in the resistance to the expansion and contraction of negative electrode associated with charging and discharging, and inferior in cycle characteristics. On the other hand, when the total content is 4000 ppm by mass or less, a lithium-ion secondary battery satisfactory in initial efficiency and cycle characteristics can be obtained, and the cycle characteristics are particularly enhanced. The initial efficiency and cycle characteristics are further enhanced at 2000 ppm by mass or less. On the other hand, when the total content of tar components is less than 1 ppm by mass, the vacuum treatment of the negative-electrode material powder for lithium-ion secondary battery is prolonged, leading to increase in manufacturing cost. Therefore, the total content of tar components is more preferably set to not less than 40 ppm by mass.

Fig. 2 is a view showing the Raman spectrum of a carbon film-formed silicon oxide powder, in which peaks of D band and G band exist. The negative-electrode material powder for a lithium-ion secondary battery of the present invention has peaks at 1350 cm$^{-1}$ and 1580 cm$^{-1}$ as shown in the same figure, while the peak at 1580 cm$^{-1}$ has a half-value width of not less than 50 cm$^{-1}$ and not more than 100 cm$^{-1}$ in the Raman spectrum.

The "peaks exist at 1350 cm$^{-1}$ and 1580 cm$^{-1}$ in the Raman spectrum" means that carbon exists in a sample being measured. The peak at 1350 cm$^{-1}$ is a peak derived from disorder in crystal structure of carbon, which is called D band, and means that carbon is almost amorphous.

The peak at 1580 cm$^{-1}$ is a peak derived from graphite structure, which is called G band, and the larger the half-value width is, the lower the crystallinity of graphite is. Carbon having high crystallinity in which the half-value width of the peak at 1580 cm$^{-1}$ is less than 50 cm$^{-1}$ causes the deterioration of the cycle characteristics of the lithium-ion secondary battery due to low capability of relaxing the expansion and contraction of silicon oxide in addition to low receiving rate of lithium ions. On the other hand, when the half-value width exceeds 100 cm$^{-1}$, the electric conductivity of the carbon film is reduced. The half-value width of the peak at 1580 cm$^{-1}$ is thus preferably not less than 60 cm$^{-1}$ and not more than 90 cm$^{-1}$.

It is preferred that in the Raman spectrum, the ratio $I_{1350}/I_{1580}$ of the height $I_{1350}$ of the peak at 1350 cm$^{-1}$ to the height $I_{1580}$ of the peak at 1580 cm$^{-1}$ satisfies $0.1 < I_{1350}/I_{1580} < 1.4$. When $I_{1350}/I_{1580}$ is 0.1 or less, the cycle characteristics of lithium-ion secondary battery are deteriorated due to low capability of relaxing the expansion and contraction of silicon oxide in addition to low receiving rate of lithium ions, which result from high crystallinity of the carbon film. On the other hand, when the ratio is 1.4 or more, the electric conductivity of the carbon film is deteriorated.

In the Raman spectrum, as shown in Fig. 2, the peak height is the height from a baseline or a straight line connecting both side bottoms of an object peak to the peak. The half-value width is the length of a segment which is formed, when a straight line parallel to the horizontal axis is drawn at the midpoint between the peak and the baseline in the wave number of the peak, by two intersections of the straight line with the Raman spectrum.

The end points of upper limit and lower limit of the baseline are concretely determined as follows. In the peak at 1350 cm$^{-1}$, the upper limit of the baseline is 1450 cm$^{-1}$, the lower limit is 1250 cm$^{-1}$, the intensity at the upper limit is an average value of intensity in the range of 1450$\pm$5 cm$^{-1}$, and the intensity at the lower limit is an average value of intensity in the range of 1550$\pm$5 cm$^{-1}$. In the peak at 1350 cm$^{-1}$, the upper limit of the baseline is 1650 cm$^{-1}$, the lower limit is 1550 cm$^{-1}$, the intensity at the upper limit is an average value of intensity in the range of 1650$\pm$5 cm$^{-1}$, and the intensity at the lower limit is an average value of intensity in the range of 1550$\pm$5 cm$^{-1}$.

The Raman spectrum shown in Fig. 2 is of a negative-electrode material powder for lithium-ion secondary battery which meets the definitions of the present invention, in which the peak at 1350 cm$^{-1}$ is located at 1347.2 cm$^{-1}$ and has a height of 500.4 (optional unit), and the peak at 1580 cm$^{-1}$ is located at 1594.9 cm$^{-1}$ and has a height of 820.4 (optional unit) and a half-value width of 70.4 cm$^{-1}$. The $I_{1350}/I_{1580}$ is 0.610.

In the negative-electrode material powder for lithium-ion secondary battery of the present invention, the specific surface area measured by the BET method is preferably not less than 0.3 m$^2$/g and not more than 40 m$^2$/g, more preferably, not less than 0.3 m$^2$/g and not more than 5.0 m$^2$/g. A small specific surface area of the negative-electrode material powder allows inhibition of the generation of the irreversible capacity component on the electrode surface during initial charging and discharging. When the specific surface area is 40 m$^2$/g or less in powder having a particle size of about 10 $\mu$m, satisfactory performance of lithium-ion secondary battery can be secured with the generation of the irreversible capacity component being sufficiently reduced. When the specific surface area is 5.0 m$^2$/g or less, the performance of lithium-ion secondary battery can be further enhanced. However, the production of powder having a specific surface area smaller than 0.3 m$^2$/g is difficult to industrialize from an economic viewpoint.

The ratio of the conductive carbon film (hereinafter referred to as "carbon coating rate") in the negative-electrode material powder for lithium-ion secondary battery is preferably not less than 0.2 mass% and not more than 10 mass%. This is based on the following reason.

Although the carbon film also contributes to the charging and discharging capacity of a lithium-ion secondary battery similarly to the lower silicon oxide, the charging and discharging capacity per unit mass thereof is small, compared with the lower silicon oxide. Therefore, the carbon coating rate of the negative-electrode material powder for lithium-ion secondary battery is preferred to be not more than 10 mass% from the viewpoint of securing the charging and discharging capacity of a lithium-ion secondary battery. On the other hand, when the carbon coating rate is smaller than 0.2 mass%, the conductivity-imparting effect by the conductive carbon film cannot be obtained, and a lithium-ion secondary battery using such a negative-electrode material powder hardly acts as a battery.

The specific resistance of the negative-electrode material powder for a lithium-ion secondary battery is preferably 40000 $\Omega$cm or less. This is because when the specific resistance is larger than 40000 $\Omega$cm, the powder hardly acts as the electrode active material of a lithium-ion secondary battery. The lower limit of the specific resistance does not particularly have to be specified since the smaller the specific resistance, the more satisfactory the electric conductivity, and a condition suitable for the electrode active material for a lithium-ion secondary battery is provided.

In the negative-electrode material powder for a lithium-ion secondary battery, it is preferred that a maximum value P1 of SiO$_x$-incurred halos which appear at 10°$\leq$2$\theta$$\leq$30° and a value P2 of the strongest line peak of Si (111) which appears at 2$\theta$=28.4$\pm$0.3° in measurement by an X-ray refraction device (XRD) using CuK$_\alpha$ ray satisfy a relationship of P2/P1<0.01, or that the negative-electrode material powder is amorphous. This is because it is acceptable for the lithium ion secondary battery that the lower silicon oxide powder in the negative-electrode material powder is amorphous.

The average particle size of the negative-electrode material powder for a lithium-ion secondary battery is preferably not less than 1 $\mu$m and not more than 15 $\mu$m, more preferably not less than 3 $\mu$m and not more than 12 $\mu$m. When the average particle size is too small, homogenous slurry cannot be formed in the production of the electrode, and the powder is apt to come off from a current collector. On the other hand, when the average particle size is too large, the preparation of an electrode film constituting the working electrode 2c shown in Fig. 1 becomes difficult, and the detachment of the powder from the current collector can be caused. The average particle size is a value which is measured as a weight average value D$_{50}$ (a particle size or median diameter when the accumulated weight is 50% of the total weight) in granularity distribution measurement by laser diffractometry.

3. Analysis Method

3-1. Calculation of the x of SiOx

The x of SiO$_x$ is the mole ratio (O/Si) of O content to Si content in the negative-electrode material powder for a lithium-ion secondary battery, and it can be calculated by use of the O content and Si content which are measured, for example, by the following measuring method.

3-2. Measurement of O Content

The O content in the negative-electrode material powder for a lithium-ion secondary battery is calculated from the O content in a sample which is quantitatively evaluated by analyzing the sample of 10 mg by an inert gas fusion/ infrared absorption method by use of an oxygen concentration analyzer (by LECO, TC 436).

3-3. Measurement of Si Content

The Si content in the negative-electrode material powder for a lithium-ion secondary battery is calculated from the Si content of a sample under quantitative evaluation by adding nitric acid and fluoric acid to the sample to dissolve the sample and analyzing the resulting solution by an ICP emission spectrophotometer (made by SHIMADZU). In this method, Si, SiO and $SiO_2$ are dissolved, and Si constituting them can be detected.

3-4. Evaluation of Formation State of Conductive Carbon Film

In the negative-electrode material powder for a lithium-ion secondary battery of the present invention, the wording of "including a conductive carbon film formed on the surface of a lower silicon oxide powder" means that the mole ratio Si/C of Si to C is 0.02 or less when a lower silicon oxide powder subjected to the forming treatment of the conductive carbon film undergoes surface-analysis by an X-ray photoelectron spectrometer (XPS) using AlK$\alpha$ ray (1486.6 eV). The measurement conditions of XPS are shown in Table 1. The "Si/C is 0.02 or less" means a state such that most of the surface of the lower silicon oxide powder is covered with C, with almost no exposure of Si.
[Table 1]

TABLE 1

| Device | Quantera SXM (by PHI) |
|---|---|
| Excited X-ray | Al K$_\alpha$ ray (1486.6 eV) |
| Photoelectron escape angle | 45° |
| Correction of bond energy | C 1s main peak is 284.6 eV |
| Electron orbit | C: 1s, Si: 2p |

3-5. Measurement of Specific Surface Area of Conductive Carbon Film-Formed Lower Silicon Oxide Powder

The specific surface area of a lower silicon oxide powder with a conductive carbon film being formed can be measured by the following BET method. A sample of 0.5 g is put in a glass cell and dried under reduced pressure at 200°C for about 5 hours. The specific surface area is calculated from a nitrogen gas adsorption isotherm at liquid nitrogen temperature (-196°C) which is measured with respect to this sample. The measurement condition is shown in Table 2.
[Table 2]

TABLE 2

| Device | BELSORP-18PLUS-HT (by BEL Japan, Inc.) |
|---|---|
| Measuring Mode | Isothermal adsorption process is measured by multipoint method. Linear regression at relative pressure 0.1 to 0.3 |
| Saturated Vapor Pressure | 101.3 kPa |
| Measured Relative Pressure | 0 to 0.4 |
| Equilibration Set Time | 180 seconds after reaching equilibrium pressure |

3-6. Measurement of Content of Tar Component by TPD-MS

The residual amount of tar component in the negative-electrode material powder for a lithium-ion secondary battery can be measured by the following TPD-MS (Temperature Programmed Desorption-Mass Spectroscopy). A sample of 50 mg is put in a silica-made cell and heated from room temperature to 1000°C at a rate of 10 K/min in a helium gas flow of 50 mL/min. The gas being generated is analyzed by a mass analyzer (by SHIMADZU, GC/MS QP5050A).

The tar component means a high-molecular-weight component such as aromatic hydrocarbon, which is produced when the gas of hydrocarbon or organic matter is thermally decomposed. In the present invention, the total amount of constituents having molecular weights of 57, 106, 178, 202, 252 and 276 is regarded as the residual amount of tar component (refer to Table 5 to be described later). The typical chemical species of each molecular weight is xylene for 106, phenanthrene and antracene for 178, pyrene for 202, perylene and benzopyrene for 252, and pentacene and picene for 276.

3-7. Measurement of Raman Spectrum

The Raman spectrum is measured under conditions shown in Table 3 by use of a Raman spectrometric device.
[Table 3]

TABLE 3

| Device | Ramanor T-64000 (by Jobin Yvon) |
|---|---|
| Beam Diameter | 100 $\mu$m |
| Light Source | Ar-ion laser (Wavelength 514.5 nm) |
| Output | 30 mW |
| Diffraction Grating | Spectrograph 600 gr/mm |
| Slit | 100 $\mu$m |
| Detector | CCD (by Jobin Yvon, 1024×256) |

3-8. Measurement of Carbon Coating Rate

The carbon coating rate is calculated from the mass of the negative-electrode material powder for a lithium-ion secondary battery and a result of carbon amount which is quantitatively evaluated by analyzing $CO_2$ gas by an oxygen stream combustion-infrared absorption method by use of a carbon concentration analyzing device (by LECO, CS 400). A ceramic crucible is used as the crucible, copper is used as the combustion improver, and the analysis time is 40 seconds.

3-9. Measurement of Specific Resistance

The specific resistance p ($\Omega$cm) of the negative-electrode material powder for a lithium-ion secondary battery is calculated using the following equation (2).

$$\rho = R \times A/L \quad \dots \quad (2)$$

where R: electric resistance of sample ($\Omega$), A: bottom area of sample ($cm^2$), and L: thickness of sample (cm).
The electric resistance of a sample can be measured, for example, by a two-terminal method using a digital multimeter (by Iwatsu Test Instruments Corp., VOAC 7513). In this case, the sample of 0.20 g is filled in a powder resistance measuring tool (tool portion: made of stainless with an inside diameter of 20 mm, frame portion: made of polytetrafluoroethylene) and molded by pressurization at 20 kgf/$cm^2$ for 60 seconds, and the thickness of the molded sample is measured using a micrometer.

4. Production of Lower Silicon Oxide Powder

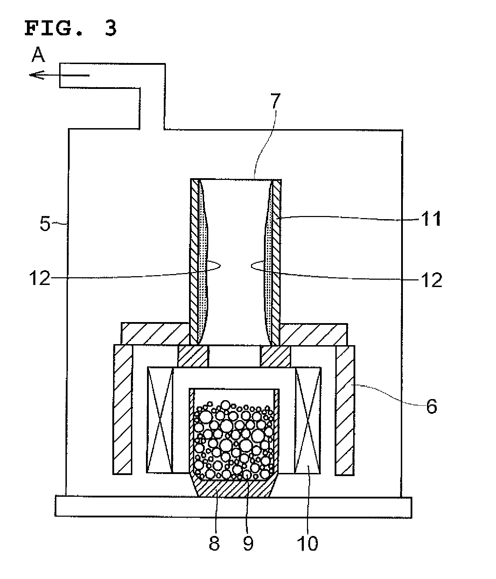

Fig. 3 is a view showing a configuration example of a production equipment for silicon oxide. This equipment includes a vacuum chamber 5, a raw material chamber 6 disposed inside the vacuum chamber 5, and a precipitation chamber 7 disposed above the raw material chamber 6.
The raw material chamber 6 is a cylindrical body, and includes a cylindrical raw material container 8 disposed at the center thereof and a heating source 10 disposed to surround the raw material container 8. As the heating source 10, for example, an electric heater can be used.
The precipitation chamber 7 is a cylindrical body disposed so that its axis coincides with that of the raw material container 8. The inner periphery of the precipitation chamber 7 is provided with a precipitation substrate 11 made of stainless steel to deposit gaseous silicon oxide generated by sublimation in the raw material chamber 6 thereon.

A vacuum device (not shown) for discharging the atmospheric gas is connected to the vacuum chamber 5 housing the raw material chamber 6 and the precipitation chamber 7 to discharge the gas in the direction of arrow A.

When a lower silicon oxide is produced using the production unit shown in Fig. 3, a mixed granular raw material 9 obtained by blending silicon powder and silicon dioxide powder in a predetermined proportion as raw materials followed by mixing, granulating and drying is used. This mixed granulated raw material 9 is filled in the raw material container 8, and heated by the heating source 10 in an inert gas atmosphere or in vacuum to generate (sublimate) SiO. The gaseous SiO generated by sublimation ascends from the raw material chamber 6 into the precipitation chamber 7, in which it is deposited on the peripheral precipitation substrate 11 and precipitated as a lower silicon oxide 12. Thereafter, the precipitated lower silicon oxide 12 is taken off from the precipitation substrate 11, and pulverized by use of a ball mill or the like, whereby a lower silicon oxide powder is obtained.

5. Formation of Conductive Carbon Film

The formation of a conductive carbon film onto the surface of the lower silicon oxide powder is performed by means of CVD or the like. Concretely, the formation is performed using a rotary kiln as the device, and a mixed gas of hydrocarbon gas or an organic matter-containing gas, which is the carbon source, and inert gas as the gas.

When organic matter other than hydrocarbon is used as the carbon source, the amount of Si contributable to the occlusion and release of lithium ions is reduced since a component other than C and H, such as O or N, reacts with the silicon oxide to generate $SiO_2$ or SiN, and the capacity of the lithium-ion secondary battery is thus reduced. Therefore, hydrocarbon gas composed of only C and H is preferred as the carbon source. When the hydrocarbon gas is used as the carbon source, aromatic series composed of only C and H are generated as the tar component, with constituents having molecular weights of 57, 106, 178, 202, 252 and 276 being main.

The treatment temperature for the formation of the conductive carbon film is not lower than 700°C and not higher than 750°C. The treatment time is set, according to the thickness of a conductive carbon film to be formed, in the range of not less than 20 minutes to not more than 120 minutes. This treatment condition is within the extent that a conductive carbon film with low crystallinity can be obtained. It is also within the extent that the generation of SiC in the vicinity of the interface between the surface of the lower silicon oxide powder and the carbon film can be suppressed.

6. Vacuum Treatment of Lower Silicon Oxide Powder with Conductive Carbon Film

The lower silicon oxide powder with the thus-formed conductive carbon film is subjected to vacuum treatment, in which the powder is retained at a temperature of not lower than 600°C and not higher than 750 °C for not less than 10 minutes under vacuum. The vacuum treatment is performed with the lower silicon oxide powder being stored in a vacuum tank, and the internal pressure of the vacuum tank is maintained at 1 Pa or less by use of an oil diffusion pump. The internal pressure is measured using a Pirani gauge.

The tar component produced during the formation of the carbon film can be volatilized and removed from the carbon film by this vacuum treatment. When the heating and retention temperature is in the above-mentioned range, the generation of SiC in the vicinity of the boundary between the silicon oxide and the carbon film is suppressed.

7. Configuration of Lithium-Ion Secondary Battery

A configuration example of a coin-shaped lithium-ion secondary battery using the negative-electrode material powder for a lithium-ion secondary battery and negative electrode for a lithium-ion secondary battery of the present invention will be described in reference to Fig. 1. The basic configuration of the lithium-ion secondary battery shown in the same drawing is as described above.

The negative-electrode material used for the working electrode 2c constituting the negative electrode 2 or the negative electrode for a lithium-ion secondary battery of the present invention is constituted using the negative-electrode material powder for a lithium-ion secondary battery of the present invention. Concretely, it can include the negative-electrode material powder for a lithium-ion secondary battery of the present invention that is an active material, other active materials, a conductive auxiliary agent and a binder. Among the constituent materials in the negative-electrode material, the proportion of the negative-electrode material powder for a lithium-ion secondary battery of the present invention to the total of the constituent materials except the binder is set to 20 mass% or more. The active materials other than the negative-electrode material powder for a lithium-ion secondary battery of the present invention do not necessarily have to be added. As the conductive auxiliary agent, for example, acetylene black or carbon black can be used, and as the binder, for example, polyacrylic acid (PAA) or polyvinylidene fluoride can be used.

The lithium-ion secondary battery of the present invention is durable at practical level with large discharge capacity and satisfactory cycle characteristics, since the above-mentioned negative-electrode material powder for a lithium-ion secondary battery and negative electrode for a lithium-ion secondary battery of the present invention are used.

The negative-electrode material powder of the present invention and the negative electrode using the same can be applied also to a capacitor.

EXAMPLES

For confirming the effects of the present invention, the following test using a lithium-ion secondary battery was carried out, and results thereof were evaluated.

1. Test Conditions

1-1. Configuration of Lithium-Ion Secondary Battery

The coin shape shown in Fig. 1 was adopted as the configuration of the lithium-ion secondary battery.

The negative electrode 2 is described first. Mixed granulated raw materials obtained by blending silicon powder and silicon dioxide powder in a predetermined proportion followed by mixing, granulating and drying were used as the raw materials, and a lower silicon oxide was precipitated on a precipitation substrate by use of the equipment shown in Fig. 3. The precipitated lower silicon oxide was pulverized for 24 hours using an alumina ball mill and made into powders with an average particle size ($D_{50}$) of 4.8 $\mu$m. These powders of lower silicon oxide ($SiO_x$) satisfied x=1.

A conductive carbon film was formed on the surface of this lower silicon oxide powder. For the formation of the carbon film, a rotary kiln was used as the device, and mixed gas of $C_4H_{10}$ (isobutane) and Ar was used as the gas. The treatment temperature for carbon film formation and the carbon coating rate are as shown in Table 4.

The lower silicon oxide powder with the conductive carbon film being formed was further subjected to vacuum treatment and made into a negative-electrode material powder for a lithium-ion secondary battery. The conditions shown in Table 4 were used as the vacuum treatment conditions (retention temperature and retention time), and the internal pressure of the vacuum tank was kept at 1 Pa or less by use of an oil diffusion pump. In the lower silicon oxide powder with the conductive carbon film being formed which was subjected to vacuum treatment, the specific surface area measured by the BET method was 3 $m^2/g$, and the value of the above-mentioned P2/P1 measured by XRD was P2/P1=0.009.

[Table4]

TABLE 4

| Test No. | Classification | Treatment Temp. of Carbon Film Formation (°C) | Carbon Coating Rate (mass%) | Time of Vacuum Treatment (min) | Content of Tar Component (ppmw) | Half-value Width of 1580cm$^{-1}$-Peak (cm$^{-1}$) | Specific Resistance ($\Omega$.cm) | Sustainability Rate of Cycle Capacity (%) |
|---|---|---|---|---|---|---|---|---|
| 1 | Inventive Ex | 700 | 2.4 | 15 | 1917 | 70.3 | 9200 | 93-1 |
| 2 | Inventive Ex | 700 | 2.4 | 120 | 41 | 69.8 | 20 | 97.4 |
| 3 | Inventive Ex. | 700 | 5.0 | 30 | 1287 | 69.9 | 1040 | 89.3 |
| 4 | Comp. Ex. | 700 | 2.4 | Non | 7339 | 70.4 | 108000 | 71.6 |
| 5 | Comp. Ex. | 700 | 2.4 | 5 | 4800 | 70.3 | 52000 | 78-7 |
| 6 | Comp. Ex. | 900 | 2.4 | Non | 614 | 46.8 | 20 | 82.5 |
| 7 | Comp. Ex. | 1100 | 2.4 | Non | 88 | 38.1 | 16 | 79.8 |

Test Nos. 1 to 3 are Examples adopting a treatment temperature for carbon film formation of 700°C and a vacuum treatment condition of 15 minutes or more at 750°C, or Inventive examples in which the total content of tar components in negative-electrode material powder for a lithium-ion secondary battery and the half-value width of the peak at 1580 cm$^{-1}$ in the Raman spectrum satisfied the provision of the present invention. The total content of tar components was measured by TPD-MS. The molecular weight-based contents of tar components in the negative-electrode material powder for a lithium-ion secondary battery of Test No. 1 are shown in Table 5.

[Table 5]

TABLE 5

| Molecular Weight | Content(ppmw) |
|---|---|
| 57 | 108 |
| 106 | 321 |
| 178 | 544 |
| 202 | 658 |
| 252 | 187 |
| 278 | 99 |
| Total | 1917 |

Test Nos. 4 and 5 are Examples adopting the same conditions as the Inventive examples except that the vacuum treatment was not performed or that the retention time of vacuum treatment was short, and Comparative examples in which the total content of tar components in the negative-electrode material powder for the lithium-ion secondary battery did not satisfy the provision of the present invention.

Test Nos. 6 and 7 are Examples adopting the same conditions as the Inventive examples except that the treatment temperature for carbon film formation was high such as 900°C or 1100°C and that the vacuum treatment was not performed, and Comparative examples in which the half-value width of the peak at 1580 cm$^{-1}$ in the Raman spectrum in the negative-electrode material powder for the lithium-ion secondary battery did not satisfy the provision of the present invention.

Slurry was prepared by adding n-methylpyrrolidone to a mixture composed of 65 mass% of the negative-electrode material powder for lithium-ion secondary battery, 10 mass% of acetylene black and 25 mass% of PAA. This slurry was applied to a copper foil of 20 $\mu$m in thickness followed by drying for 30 minutes in an atmosphere of 120°C, and the resulting copper foil was punched into a size having an area of 1 cm$^2$ per one side to form the negative electrode 2.

The counter electrode 1c was made of lithium foil. As the electrolyte, a solution in which LiPF$_6$ (lithium hexafluorophosphate) was dissolved to a mixture of EC (ethylene carbonate) and DEC (diethyl carbonate) with a volume ratio of 1:1 so as to have a ratio of 1 mol/L was used. As the separator, a polyethylene porous film of 30 $\mu$m in thickness was used.

1-2. Conditions of Charging and discharging Test

A secondary battery charging and discharging test device (by NAGANO) was used for the charging and discharging test. Charging was performed with a constant current of 1 mA until the voltage between both electrodes of the lithium-ion secondary battery reaches 0 V, and performed while maintaining 0 V after the voltage reached 0 V. Thereafter, the charging was terminated when the current value fell below 20 $\mu$A. Discharging was performed with a constant current of 1 mA until the voltage between both the electrodes of the lithium-ion secondary battery reached 1.5 V. Ten cycles of the above-mentioned charging and discharging were carried out as the test.

2. Test Result

Lithium-ion secondary batteries produced in the above-mentioned conditions were subjected to the charging and discharging test, and evaluated with the sustainability rate of cycle capacity as an index. The specific resistance value of the negative-electrode material powder for the lithium-ion secondary battery was also measured. These values are shown in Table 4 together with the test conditions. The sustainability rate of cycle capacity is a value obtained by dividing the discharge capacity in the 10-th cycle by the initial discharge capacity, and the larger this value is, the more satisfactory the cycle characteristics is.

In Test Nos. 1 to 3 which are Inventive examples, the sustainability rate of cycle capacity was excellent such as 89.3% or more. This is attributable to that the retention time in the vacuum treatment was sufficiently long such as 15 minutes or more, and the retention temperature was low such as 750°C. The total content of tar components was reduced to 1917 ppm by mass or less due to the sufficiently long retention time in the vacuum treatment, and the detachment of the carbon film during charging and discharging was suppressed with good adhesion between silicon oxide and the carbon film. The suppression of the generation of SiC in the vicinity of the interface between silicon oxide and the carbon film was assumed to be due to the low retention temperature in the vacuum treatment. Further, due to the low treatment temperature for carbon film formation, the carbon film being formed had low crystallinity with the half-value width of the peak at 1580 cm$^{-1}$ in the Raman spectrum of 69.8 cm$^{-1}$ or more, and the capability of relaxing the expansion and contraction of silicon oxide was enhanced.

It was confirmed that each of the lithium-ion secondary batteries of Test Nos. 1 to 3 had an excellent initial discharge capacity such as 1750 mAh/g or more.

In Test Nos. 4 and 5 which are Comparative examples, the sustainability rate of cycle capacity was 71.6% or 78.7%, which is inferior to those of the Inventive examples, although the half-value width of the peak at 1580 cm$^{-1}$ in Raman spectrum is about 70 cm$^{-1}$ that is equivalent to the Inventive examples. This is attributable to that the total content of tar components was large such as 7339 ppm by mass or 4800 ppm by mass because the vacuum treatment is not performed or the retention time thereof is insufficient.

In Test Nos. 6 and 7 which are Comparative examples, the sustainability rate of cycle capacity was 82.5% or 79.8%, which is inferior to those of the Inventive examples, although the total content of tar components was low such as 614 ppm by mass or 88 ppm by mass because the treatment temperature for carbon film formation was as high as 900°C or 1100°C. This is attributable to that the crystallinity of the carbon film being formed was high with the half-value width of the peak at 1580 cm$^{-1}$ in the Raman spectrum being narrow such as 46.8 cm$^{-1}$ or 38.1 cm$^{-1}$.

INDUSTRIAL APPLICABILITY

The negative-electrode material powder for a lithium-ion secondary battery and the negative electrode for a lithium-ion secondary battery or negative electrode for a capacitor of the present invention can be used to obtain a lithium-ion secondary battery or a capacitor which are durable at practical level with large discharge capacity and satisfactory cycle characteristics. The lithium-ion secondary battery and capacitor of the present invention are large in discharge capacity and satisfactory in cycle characteristics. Accordingly, the present invention is a useful technique in the field of secondary batteries and capacitors.

REFERENCE SIGNS LIST

| | |
|---|---|
| 1: | Positive electrode |
| 1a: | Counter electrode case |
| 1b: | Counter electrode current collector |
| 1c: | Counter electrode |
| 2: | Negative electrode |
| 2a: | Working electrode case |
| 2b: | Working electrode current collector |
| 2c: | Working electrode |
| 3: | Separator |
| 4: | Gasket |
| 5. | Vacuum chamber |
| 6: | Raw material chamber |
| 7: | Precipitation chamber |
| 8: | Raw material container |
| 9: | Mixed granular raw material |
| 10: | Heating source |
| 11: | Precipitation substrate |
| 12: | Lower silicon oxide |

**Claims**

**1.** A negative-electrode material powder for a lithium-ion secondary battery including a conductive carbon film on the surface of a lower silicon oxide powder, **characterized in that**

the total content of tar components measured by TPD-MS is not less than 1 ppm by mass and not more than 4000 ppm by mass; and

peaks exist at 1350 cm$^{-1}$ and 1580 cm$^{-1}$ in the Raman spectrum, while the peak at 1580 cm$^{-1}$ has a half-value width of not less than 50 cm$^{-1}$ and not more than 100 cm$^{-1}$.

2. The negative-electrode material powder for the lithium-ion secondary battery according to claim 1, **characterized in that** a specific surface area measured by the BET method is not less than 0.3 m$^2$/g and not more than 40 m$^2$/g.

3. The negative-electrode material powder for the lithium-ion secondary battery according to claim 1 or 2, **characterized in that** in the Raman spectrum, the ratio $I_{1350}/I_{1580}$ of the height ($I_{1350}$) of the peak at 1350 cm$^{-1}$ to the height ($I_{1580}$) of the peak at 1580 cm$^{-1}$ satisfies $0.1 < I_{1350}/I_{1580} < 1.4$.

4. The negative-electrode material powder for the lithium-ion secondary battery according to any one of claims 1 to 3, **characterized in that** the proportion of the conductive carbon film is not less than 0.2 mass% and not more than 10 mass%.

5. The negative-electrode material powder for the lithium-ion secondary battery according to any one of claims 1 to 4, **characterized in that** a specific resistance is not more than 40000 $\Omega$cm.

6. The negative-electrode material powder for the lithium-ion secondary battery according to any one of claims 1 to 5, **characterized in that** a maximum value P1 of SiO$_x$-derived halos which appear at $2\theta=10$ to $30°$ and a value P2 of the strongest line peak of Si (111) which appears at $2\theta=28.4\pm0.3°$, in measurement by XRD using CuK$_\alpha$ ray, satisfy a relationship of P2/P1<0.01.

7. A negative electrode for a lithium-ion secondary battery which uses the negative-electrode material powder for the lithium-ion secondary battery according to any one of claims 1 to 6.

8. A negative electrode for a capacitor which uses the negative-electrode material powder for the lithium-ion secondary battery according to any one of claims 1 to 6.

9. A lithium-ion secondary battery which uses the negative electrode for the lithium-ion secondary battery according to claim 7.

10. A capacitor which uses the negative electrode for the capacitor according to claim 8.

FIG. 1

FIG. 2

FIG. 3

<table>
<tr><td colspan="3"><b>INTERNATIONAL SEARCH REPORT</b></td><td>International application No.<br>PCT/JP2011/004348</td></tr>
</table>

**A.  CLASSIFICATION OF SUBJECT MATTER**
*H01M4/48*(2010.01)i, *H01G9/058*(2006.01)i, *H01M4/36*(2006.01)i, *H01M4/587*
(2010.01)i

According to International Patent Classification (IPC) or to both national classification and IPC

**B.  FIELDS SEARCHED**

Minimum documentation searched (classification system followed by classification symbols)
H01M4/48, H01G9/058, H01M4/36, H01M4/587

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)
JSTPlus/JST7580(JDreamII)

**C.  DOCUMENTS CONSIDERED TO BE RELEVANT**

| Category* | Citation of document, with indication, where appropriate, of the relevant passages | Relevant to claim No. |
|---|---|---|
| A | JP 2008-198610 A  (Samsung SDI Co., Ltd.),<br>28 August 2008 (28.08.2008),<br>entire text<br>& US 2008/0193831 A1 | 1-10 |
| A | JP 2005-243508 A  (JFE Chemical Corp.),<br>08 September 2005 (08.09.2005),<br>entire text<br>& WO 2005/031898 A1 | 1-10 |

☐ Further documents are listed in the continuation of Box C.   ☐ See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>27 October, 2011 (27.10.11) | Date of mailing of the international search report<br>08 November, 2011 (08.11.11) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3952180 B